# NEUE EUROPÄISCHE PATENTSCHRIFT

(11) **EP 2 714 552 B2**
(45) Veröffentlichungstag und Bekanntmachung des Hinweises auf die Entscheidung über den Einspruch: **04.03.2020**
(45) Hinweis auf die Patenterteilung: 10.02.2016
(21) Anmeldenummer: 12723480.5
(22) Anmeldetag: 24.05.2012
(51) Int. Cl.: B65G 1/137, B65G 47/51

(54) **VERTEILEINRICHTUNG ZUM ZUSAMMENSTELLEN EINER GRUPPE VON FÖRDERGÜTERN**
DISTRIBUTOR DEVICE FOR ASSEMBLING A GROUP OF ARTICLES TO BE CONVEYED
DISPOSITIF DE DISTRIBUTION POUR RASSEMBLER UN GROUPE DE PRODUITS TRANSPORTÉS

(30) Priorität: 31.05.2011 DE 102011103194
(43) Veröffentlichungstag der Anmeldung: 09.04.2014
(73) Patentinhaber: SSI Schäfer Automation GmbH, 8051 Graz-Gösting (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2012/059669
(87) Internationale Veröffentlichungsnummer: WO 2012/163780

(56) Entgegenhaltungen:
- EP-A1- 0 516 970
- EP-A1- 0 565 000
- EP-A1- 1 293 455
- EP-A2- 0 336 714
- DE-U1- 20 103 664
- US-A1- 2003 097 201

## Beschreibung

Die vorliegende Erfindung betrifft eine Verteileinrichtung. Die vorliegende Erfindung kommt insbesondere bei Hängeförderern zum Einsatz und wird zum Beispiel zum Zusammenstellen einer Lieferung von Kleidungsstücken eingesetzt, die auf Bügeln als Hängeware in einem Hängelager bevorratet werden können. Die Erfindung lässt sich auch in den Bereichen B2B und B2C einsetzen, indem z.B. Hängetaschen oder Transporttaschen hängend befördert werden, die zur Aufnahme von Stückgütern, wie z.B. Kosmetika, Pharmaka oder Ähnlichem, geeignet sind.

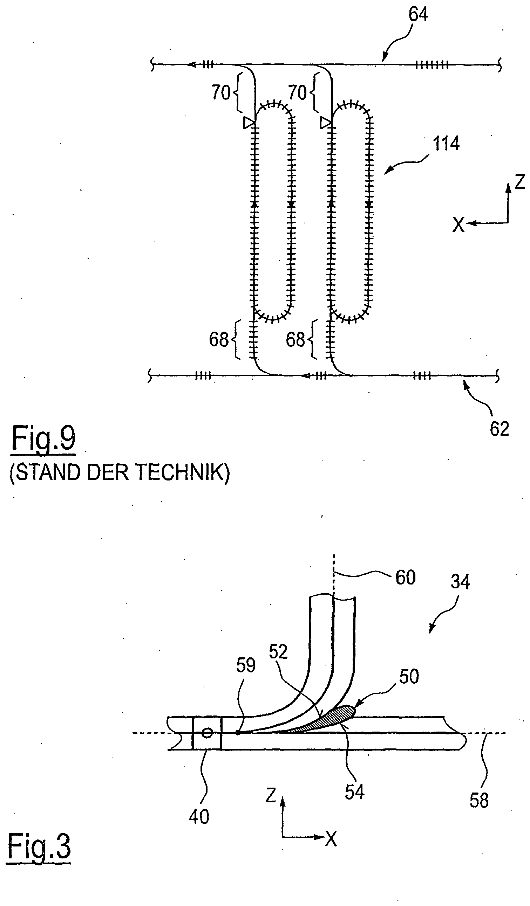

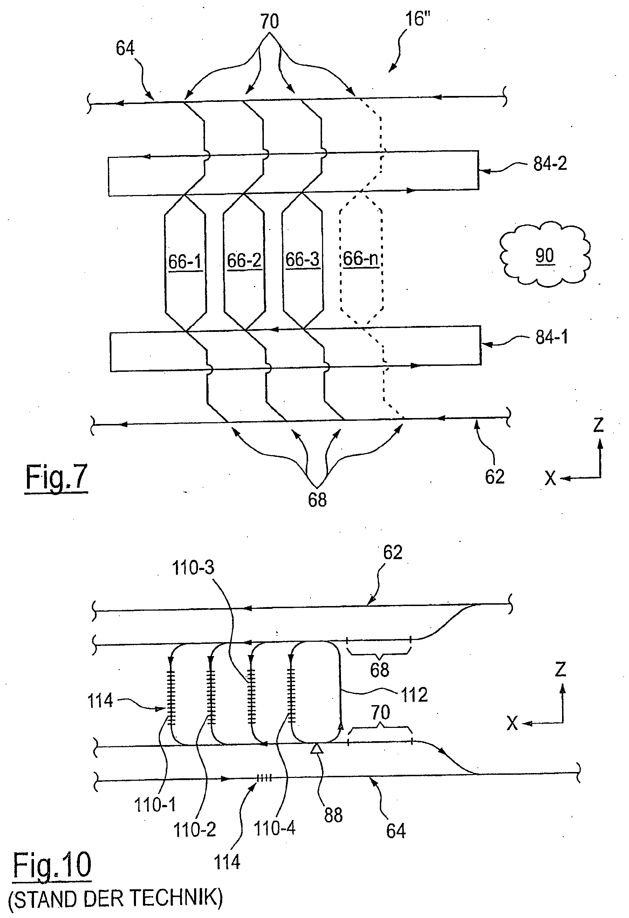

Es sind Verteileinrichtungen und Verfahren zum Zusammenstellen von Fördergütern bekannt, die unter Bezugnahme auf die Fig. 9 und 10 noch näher beschrieben werden. Die Fig. 9 zeigt eine herkömmliche, sogenannte "Speicherkreisel"-Lösung, bei der selektiv auf einzelne Fördergüter zugegriffen wird. Die Fördergüter werden über eine Zuführstrecke in einen oder mehrere Speicherkreisel eingespeist, wo sie beliebig oft endlos umlaufen können. Die Fördergüter werden jeweils über eine sogenannte Vorstaustrecke in den entsprechenden Speicherkreisel eingespeist. Die Fördergüter werden aus den Speicherkreiseln individuell ausgeschleust. Die Ausschleusung erfolgt in eine Nachstaustrecke, die stromabwärts zu jedem Speicherkreisel angeordnet ist. Am Ausgang jedes Speicherkreisels ist jeweils ein Sensor vorgesehen, der eingerichtet ist, um die Fördergüter zu lesen und zu identifizieren. Nachteilig bei dieser Lösung ist, dass pro Speicherkreisel jeweils eine Vorstaustrecke und eine Nachstaustrecke bereitgestellt werden muss. Für die Vorstau- und Nachstaustrecken wird Platz benötigt. Deshalb werden sehr breite Gebäude benötigt, wo die entsprechende Anlage installiert werden kann. Ein Austausch von Fördergütern zwischen den Speicherkreiseln ist nicht möglich. Ein Speicherkreisel ist in der EP 0 565 000 A1 gezeigt.

Natürlich könnte man die Speicherkreisel auch ohne Vor- und/oder Nachstaustrecken betreiben. Dies wäre von noch größerem Nachteil. In diesem Fall müsste der Hauptförderstrom Vorrang haben oder es müssten im Hauptförderstrom Lücken gebildet werden, um Platz für aus den Kreiseln kommenden Batch-Portionen zu haben. Derartige Lücken müssen größer als die Portionen sein und beeinträchtigen die Kapazität des Hauptförderstroms erheblich.

Die Nachstaustrecken haben jeweils eine fest vorgegebene Kapazität. Übersteigt ein Kommissionierauftrag die Kapazität einer Nachstaustrecke, muss der entsprechende (Kommissionier-)Auftrag auf verschiedene Speicherkreisel aufgeteilt werden. Dies bedeutet, dass in jedem Speicherkreisel eigentlich das gesamte Fördergutspektrum bevorratet werden muss. Daraus folgt wiederum, dass die Speicherkreisel sehr groß sein müssen, d.h. eine ausreichend große Kapazität zur Aufnahme einer großen Anzahl von Fördergütern aufweisen müssen. Alternativ muss der Speicherkreisel mehrfach umlaufen, um die entsprechenden Teilaufträge an die gleiche Nachstaustrecke auszugeben.

Die herkömmliche "Speicherkreisel"-Lösung stellt einen umlaufenden Förderer mit Weichen auf der linken oder der rechten Seite und mit 180°-Bögen dar.

In der Fig. 10 ist die herkömmliche, sogenannte "Sortierinsel"-Lösung gezeigt. Bei der Sortierinsel-Lösung werden Fördergüter von einem Hauptstrom kommend in einer Vorstaustrecke gesammelt und anschließend auf eine oder mehrere Staustrecken verteilt. Die Staustrecken verbinden die Vorstaustrecke mit einer Nachstaustrecke. Die Nachstaustrecke ist mit einer Abführstrecke verbunden. Die Staustrecken sind parallel zueinander angeordnet und werden unidirektional betrieben. Wenn die Staustrecken mit ausreichend Fördergütern gefüllt sind, werden solche Fördergüter, die zur Abarbeitung eines Kommissionierauftrags benötigt werden, sukzessive aus den Staustrecken in eine sogenannte Sortier-/Pick-Strecke umgelagert. Bei diesem Ansatz kann immer nur eine Staustrecke gleichzeitig bewegt werden. Unter Umständen ist es erforderlich, dass die Fördergüter mehrmals zwischen der Sortier-/Pick-Strecke und einer jeweiligen Staustrecke hin und her bewegt werden müssen. Üblicherweise sind die Fördergüter, die zu dem gerade zu bearbeitenden Kommissionierauftrag gehören, nicht am stromabwärts gelegenen Ende der Staustrecke angeordnet, so dass ein mehrfaches Umlagern erforderlich ist. Genau wie bei der oben beschriebenen "Speicherkreisel"-Lösung wird ein sehr breites (und langes) Gebäude benötigt. Die "Sortierinsel"-Lösung hat jedoch gegenüber der "Speicherkreisel"-Lösung den Vorteil, dass ein einziger Sensor ausreicht, um die Fördergüter zu erfassen und zu identifizieren. Dieser Sensor sitzt üblicherweise im Eingangsbereich der Sortier-/Pick-Strecke. Die Sortier-/Pick-Strecke ist meistens leer, während die Staustrecken meistens nahezu vollständig mit Fördergütern gefüllt sind. Die Sortier-/Pick-Strecke muss leer sein, sobald eine neue Staustrecke zur Bearbeitung abgerufen wird.

Das Dokument US 4,244,672 A zeigt ein System zum Sequenzieren. Das Dokument DE 94 06 061 U1 zeigt eine Sortieranlage. Das Dokument EP 1 293 455 A1 offenbart eine Verteileinrichtung gemäß dem Oberbegriff des Anspruchs 1 und ein Verfahren zum Einlagern von Fördergut-Teilen in einen Speicher und zur Ausgabe von ausgewählten Fördergut-Teilen. Das Dokument DE 201 03 664 U1 offenbart ein Fördersystem für Artikel, die auf Trägern auf Gleitschienen verschiebbar sind.

Vor diesem Hintergrund ist es eine Aufgabe der vorliegenden Erfindung, eine Verteileinrichtung bereitzustellen, die die oben erwähnten Nachteile überwindet.

Die oben genannte Aufgabe wird gelöst durch eine Verteileinrichtung nach Anspruch 1.

Die Verteileinrichtung der Erfindung ist aus wenigen, technisch einfach aufgebauten Förderelementen zusammengestellt, insbesondere ausschließlich aus Geraden, Kurven und "einfachen" Weichen. Natürlich können Höhenunterschiede mittels Liften oder Ähnlichem überwunden werden. Die Verteileinrichtung baut sehr klein. Die Abstände zwischen einzelnen Strecken der Speicherkreisel sowie zwischen den Speicherkreiseln selbst können sehr klein gewählt werden. Die Investitionskosten sind geringer als bei herkömmlichen Systemen, insbesondere weil Standardkomponenten eingesetzt werden. Das System ist umlaufend angetrieben. Es benötigt keine Steig- und Gefällestrecken und ist somit in der vorzugsweise vertikalen Ausrichtung extrem platzsparend. Es weist ebenfalls 180°-Bögen auf, die aber im Gegensatz zum Stand der Technik gleichzeitig als Weiche fungieren.

Für eine Planung und für die Abläufe ist es egal, in welche bzw. aus welcher Richtung ein Hauptförderstrom fließt oder ob die Speicherkreisel 66 von "oben" oder von "unten" gespeist werden bzw. in welchem Drehsinn die Ströme innerhalb der Kreisel 66 fließen, weil der Aufbau der Verteileinrichtung 16 vorzugsweise symmetrisch ist und insbesondere in der Horizontalen erfolgt. Bei einem Umlagervorgang kann man Fördergüter z.B. auf kürzestem Wege von einem ersten in einen letzten Speicherkreisel 66, oder umgekehrt, transferieren. Bei herkömmlichen Verteileinrichtungen hätte man komplette Umläufe in Kauf nehmen müssen oder technisch komplexere 3-Wege-Weichen (im Sinne eines Knotens mit 4 Abzweigungen) benutzen müssen, welche in einen 180°-Bogen eines Umlaufförderers eingreifen. Bei der Erfindung kann eine Kopfweiche benutzt werden, die zwei Standardzeichen als 180°-Bogen aufweisen kann.

Ferner wird ein Verfahren zum Zusammenstellen einer Gruppe von Fördergütern offenbart, die zu einem bestimmten Kommissionierauftrag aus einer Vielzahl von Kommissionieraufträgen gehören, mit den folgenden Schritten: Zuführen von mehr Fördergütern, als der Gruppe von Fördergütern gehören, die zu dem bestimmten Kommissionierauftrag gehören, über eine Zuführstrecke, Einspeisen der zugeführten Fördergüter in mindestens zwei Speicherkreisel, die an die Zuführstrecke gekoppelt sind und Ausschleusen der Fördergüter, die zu dem bestimmten Kommissionierauftrag gehören, in mindestens eine Nachstaustrecke, indem die Fördergüter in den mindestens zwei Speicherkreiseln wiederkehrend umlaufen, die wiederkehrend umlaufenden Fördergüter vor einer Ausschleusweiche identifiziert und überprüft werden, ob sie zu dem bestimmten Kommissionierauftrag gehören, und identifizierte und zu dem bestimmten Kommissionierauftrag gehörende Fördergüter aus dem entsprechenden Speicherkreisel ausgeschleust und in die mindestens eine Nachstaustrecke eingespeist werden.

Das Verfahren zeichnet sich durch eine große Skalierbarkeit, eine Maximierung des Durchsatzes sowie eine große Flexibilität hinsichtlich von Umlagerprozessen aus.

Bei einer bevorzugten Ausgestaltung kann eine Weichengruppe eine Vielzahl von Weichen aufweisen, insbesondere mindestens eine einfache Links-Weiche und eine einfache Rechts-Weiche.

Ferner ist mindestens ein Umlaufkreisel mit einem endlos umlaufenden Förderstrang vorgesehen, wobei die Weichengruppen mit dem mindestens einen Umlaufkreisel verbunden sind.

Mit dem Umlaufkreisel können die Fördergüter hinsichtlich ihrer Reihenfolge geordnet werden. Zu ordnende Fördergüter können die Speicherkreisel umkreisen, ohne in einen der Speicherkreisel eingespeist zu werden bzw. ohne einen Förderweg zurück zu legen, der sich zumindest teilweise mit Förderstrecken der Speicherkreisel überschneidet. Die Fördergüter können aus den Speicherkreiseln in Nachstaustrecken gefördert werden, die stromaufwärts relativ zum ausschleusenden Speicherkreisel liegen. Neue Fördergüter, die erstmalig in einen der Speicherkreisel eingespeist werden sollen, können an einer Stelle der Speicherkreisel eingespeist werden, die eigentlich zum Ausschleusen von bevorrateten Fördergütern dient. Diese Vorgehensweise kann eine Anzahl von eigentlich erforderlichen Umlagervorgängen reduzieren oder diese sogar vollständig eliminieren.

Erfindungsgemäss ist nur ein einziger Umlaufkreisel vorgesehen, wobei die mindestens zwei Speicherkreisel innerhalb des nur einen Umlaufkreisels angeordnet sind.

Erfindungsgemäss sind die Anlieferstrecke eines ersten Speicherkreisels der mindestens zwei Speicherkreisel und die Rückführstrecke eines letzten der mindestens zwei Speicherkreisel Teil des nur einen Umlaufkreisels.

In diesem Fall wird der Umlaufkreisel durch die Speicherkreisel selbst implementiert.

Bei einer weiteren bevorzugten Ausgestaltung ist jedem Speicherkreisel mindestens eine Identifikationseinrichtung zugeordnet, die eingerichtet ist, ein passierendes Fördergut zu identifizieren, um ein Ausschleusen des identifizierten Förderguts zu veranlassen.

Insbesondere kann ferner eine Steuerung vorgesehen sein, die eingerichtet ist, Fördergüter, die in den mindestens zwei Speicherkreiseln (zwischen-)gespeichert sind, in Übereinstimmung mit einem Kommissionierauftrag auszuschleusen und im Bereich der Nachstaustrecke zusammenzuführen.

Außerdem ist es von Vorteil, wenn die Fördereinrichtung ein Hängeförderer ist.

Bei einer weiteren vorteilhaften Ausführungsform werden die zugeführten Fördergüter in die mindestens zwei Speicherkreisel eingespeist, bevor die Fördergüter des bestimmten Kommissionierauftrags ausgeschleust werden.

In diesem Fall werden alle zwischenzupuffernden Fördergüter zuerst in die Speicherkreisel eingespeist, bevor irgendeiner der Kommissionieraufträge zusammengestellt wird.

Des Weiteren ist es von Vorteil, wenn die zugeführten (neuen) Fördergüter unsortiert und wahllos in die mindestens zwei Speicherkreisel eingespeist werden.

In diesem Fall kann zum Beispiel ein erster Speicherkreisel erst vollständig gefüllt werden, bevor ein weiterer Speicherkreisel gefüllt wird. Dies kann aus energetischen Gründen sinnvoll sein.

Gemäß einem weiteren Aspekt ist es von Vorteil, dass alle neuen Fördergüter zugeführt und in die mindestens zwei Speicherkreisel eingespeist werden, die zu der Vielzahl der Kommissionieraufträge gehören.

In diesem Fall sind alle Fördergüter, die zur Abarbeitung der Kommissionieraufträge benötigt werden, in den Speicherkreiseln zwischengepuffert. Es kommt zu keinen Überlappungen von Einlagerungs- und Auslagerungsvorgängen im Bereich der Speicherkreisel.

Insbesondere definiert jeder Speicherkreisel im Normalzustand einen in sich geschlossenen Förderweg, der zum Ausschleusen eines Förderguts über eine Weiche geöffnet wird und an den die mindestens eine Nachstaustrecke gekoppelt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele sind in der Zeichnung dargestellt und werden in der nachfolgenden Beschreibung näher erläutert. Es zeigen:
- Fig. 1: ein Blockdiagramm einer Kommissionieranlage, die eine Verteileinrichtung gemäß der Erfindung aufweist;
- Fig. 2: ein Blockdiagramm einer Verteileinrichtung gemäß der Erfindung;
- Fig. 3: eine Draufsicht auf eine Weiche;
- Fig. 4: eine perspektivische Ansicht der Weiche der Fig. 3;
- Fig. 5: eine Verteileinrichtung gemäß der Erfindung anhand einer vereinfacht dargestellten Streckenführung;
- Fig. 6: eine Abwandlung einer Verteileinrichtung;
- Fig. 7: eine weitere Abwandlung einer Verteileinrichtung;
- Fig. 8: ein Flussdiagramm eines Verfahrens;
- Fig. 9: eine Verteileinrichtung gemäß dem Stand der Technik; und
- Fig. 10: eine weitere Verteileinrichtung gemäß dem Stand der Technik.

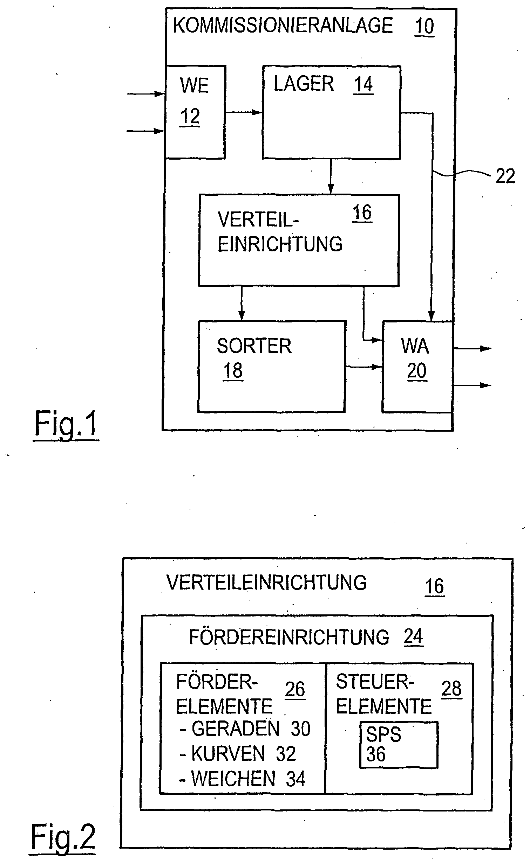

Die vorliegende Erfindung kommt zum Beispiel in Kommissionieranlagen 10 häufig zum Einsatz. Eine exemplarische Kommissionieranlage 10 ist in der Fig. 1 gezeigt. Die Kommissionieranlage 10 kann einen Wareneingang (WE) 12, ein Lager 14, eine erfindungsgemäßen Verteileinrichtung 16, einen optionalen Sorter 18 sowie einen Warenausgang (WA) 20 aufweisen. Diese Komponenten der Kommissionieranlage 10 sind über eine Fördertechnik 22 miteinander verbunden. In der Fig. 1 sind einige Verbindungen exemplarisch in Form von Pfeilen angedeutet. Andere Verbindungen sind möglich.

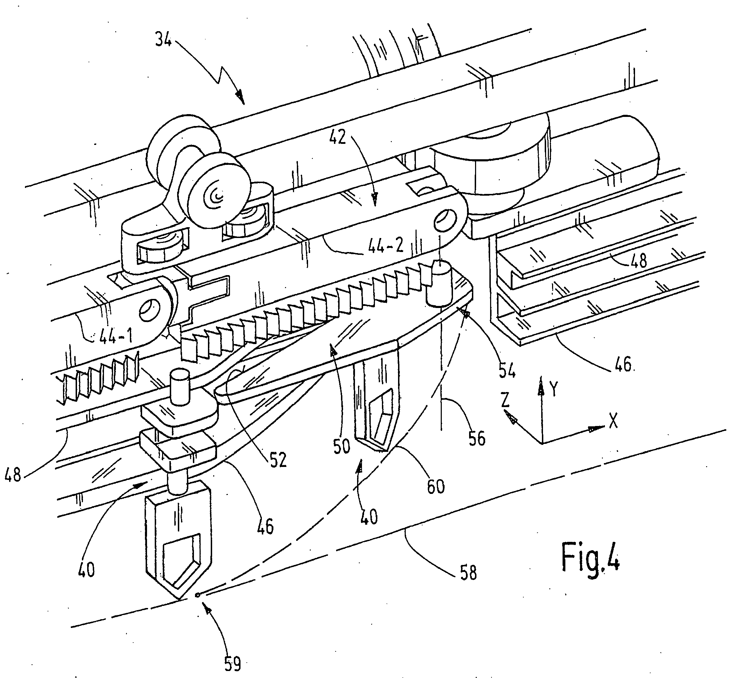

Eine Verteileinrichtung 16 gemäß der Erfindung ist in Fig. 2 gezeigt. Die Verteileinrichtung 16 weist unter anderem eine Fördereinrichtung 24 auf. Die Fördereinrichtung 24 (Fördertechnik) weist Förderelemente 26 und optional ein oder mehrere Steuerelemente 28 auf. Die Förderelemente 26 umfassen Geraden 30, Kurven 32 sowie Weichen 34. Eine Weiche 34 wird nachfolgend unter Bezugnahme auf die Fig. 3 und 4 noch näher erläutert werden. Die Steuerelemente 28 können zum Beispiel eine speicherprogrammierbare Steuerung (SPS) 36 aufweisen.

Mit der oben beschriebenen Anlage 10 können Kommissionieraufträge bearbeitet werden. Unter dem Begriff "Kommissionieren" versteht man das Zusammenstellen von Stückgütern zu einem (Kommissionier-)Auftrag. Das Kommissionieren hat zum Ziel, aus einer Gesamtmenge von Gütern (Sortiment) Teilmengen aufgrund von Anforderungen (Aufträgen) zusammenzustellen. Ein Auftrag besteht aus einer oder mehreren Auftragspositionen, die auch als Auftragszeilen bzw. Order Lines bezeichnet werden. Eine Auftragszeile gibt eine jeweilige Menge eines Artikels an. Eine "Auftrags-Batch" ist eine Zusammenfassung mehrerer Aufträge zu einem Verarbeitungslos. Eine Batch ist also eine Zusammenfassung von mehreren Aufträgen zu einer geordneten Menge oder Liste von Aufträgen. Im Batch-Betrieb werden die Aufträge zunächst gesammelt und sortiert, um dann sequentiell in einem Schub, d.h. in einer "Batch", verarbeitet zu werden. Die vorliegende Erfindung kommt insbesondere im Bereich des Handels über das Internet (B2B, B2C etc.) zum Einsatz.

Die vorliegende Erfindung kann grundsätzlich mit jedem Förderertyp (zum Beispiel Rollenförderer, Gurtförderer, Kettenförderer, etc.) eingesetzt werden. Die Begriffe Förderer und Fördertechnik sind äquivalent zu verstehen. Die Fördertechnik umfasst im Wesentlichen alle technischen und organisatorischen Einrichtungen zum Bewegen oder Transportieren von Fördergütern. Eine Fördertechnik wird besonders im Bereich der Intralogistik eingesetzt. In der nachfolgenden Beschreibung werden Hängeförderer als Fördertechnik exemplarisch eingesetzt. Ein Hängeförderer dient zum Transport von hängenden Stückgütern, wie zum Beispiel Kleidungsstücken an Bügeln. In Hängeförderanlagen kann ein Tragprofil von einer Hallendecke abgehängt werden. Es werden Adapter bewegt, die eine Öffnung zur Aufnahme der Kleiderbügelhaken oder Ähnlichem und gegebenenfalls Identifikationsmittel aufweisen, wie zum Beispiel Barcodes, RFID-Tags, etc. Ein Antrieb erfolgt üblicherweise durch einen Schleppkettenantrieb. Die als Förderstrang agierende Schleppkette läuft üblicherweise umlaufend in einem Führungsprofil. Spann- und Antriebsstationen straffen die Kette und erzeugen einen Vortrieb in einer gewünschten Laufrichtung. An der Schleppkette können in regelmäßigen Abständen die Adapter (Mitnehmer) vorgesehen sein.

Bezug nehmend auf die Fig. 3 und 4 wird nachfolgend der Aufbau einer Weiche 34 erläutert werden, wobei die Fig. 3 und 4 gemeinsam betrachtet werden.

Unter einer Weiche 34 wird nachfolgend ein Förderelement 26 verstanden, welches einen Knoten(punkt) im Sinne eines Materialflusses darstellt, wo sich (genau) drei Förderstrecken treffen. In der Fig. 4 sind eine Hauptförderstrecke 58 sowie eine Abzweigung 60 durch Strichlinien angedeutet, die sich im Knotenpunkt 59 treffen. Im Knotenpunkt 59 können (Hänge-)Adapter 40 von der Hauptstrecke 58 in die Abzweigung 60 ausgeschleust werden, wenn die Adapter 40 in der positiven X-Richtung transportiert werden. Die Adapter 40 können aus der Abzweigung 60 in die Hauptstrecke 58 eingeschleust werden, wenn die Hauptförderstrecke 58 im dargestellten Bereich der Fig. 3 und 4 in der negativen X-Richtung betrieben wird. Die Adapter 40 sind vereinfachend ohne eingehängte Bügel oder Ähnliches gezeigt. Ein grundsätzlicher Aufbau der Adapter 40 ist in der deutschen Patentanmeldung DE 10 2010 045 725 beschrieben, auf die hier Bezug genommen wird.

Die Adapter 40 werden von einer als Förderstrang agierenden, mehrgliedrigen Schleppkette 42 transportiert, die in sich geschlossen ist. Die Schleppkette 42 ist in der Fig. 4 teilweise in Form von zwei Kettengliedern 44-1 und 44-2 gezeigt. Die Schleppkette 42 ist in sich geschlossen und läuft endlos entlang der Hauptförderstrecke 58 um. Die Schleppkette 42 sowie die Kettenglieder 44 sind in der deutschen Patentanmeldung DE 10 2010 053 426 beschrieben, auf die hier Bezug genommen wird. Die Schleppkette 42 sowie die Adapter 40 werden in einem Profil 46 bewegt, von welchem in der Fig. 4 lediglich ein Teil gezeigt ist. Im Bereich der Weiche 34 kann das Profil 46 zusätzliche Führungsschienen 48 aufweisen, die die Adapter 40 von und zu einer (Weichen-)Zunge 50 führen. Die Zunge 50 weist im Wesentlichen zwei Führungsflanken 52 und 56 auf. Die Zunge 50 ist um eine (Dreh-)Achse 56 schwenkbar gelagert. Die Führungsflanke 52 dient zum Ausschleusen der Adapter 40 aus der Hauptstrecke 58, wenn sich die Hauptstrecke 58 in der positiven X-Richtung bewegt. Die Führungsflanke 52 dient zum Einschleusen von Adaptern 40, die aus der Abzweigung 60 kommend in die Hauptförderstrecke 58 eingeschleust werden, wenn die Hauptförderstrecke 58 in der negativen X-Richtung betrieben wird. In der Fig. 3 ist die Zunge 50 in einer Stellung gezeigt, in welcher die Adapter 40 während eines Transports in der positiven X-Richtung in der Hauptförderstrecke 58 verbleiben, d.h. nicht in die Abzweigung 60 ausgeschleust werden.

Die Weiche 34 kann in der Stellung, wie sie in der Fig. 3 gezeigt ist, passiv betrieben werden, wenn sich die Adapter 40 entweder aus der Abzweigung 60 kommend oder aus dem rechten Teil der Hauptförderstrecke 58 kommend dem Knoten 59 nähern. Die Adapter 40, die sich in der Fig. 3 in der Hauptstrecke 58 von rechts kommend dem Knoten 59 nähern, passieren die Zunge 50 ohne Weiteres. Die Adapter 40, die aus der Abzweigung 60 kommen und sich dem Knoten 59 nähern, stoßen an die Führungsflanke 52 an und können die Zunge 50 nach unten bewegen, so dass der Weg für die Adapter 40 aus der Abzweigung 60 frei ist und so dass der Weg für die Adapter 40 in der Hauptförderstrecke 58, wenn sie von rechts kommen, gesperrt ist. Der nächste Adapter 40, der aus dem rechten Teil der Hauptförderstrecke 58 kommt, stößt dann an die Führungsflanke 54 an und drückt die Zunge 50 zurück in die Stellung, die in der Fig. 3 gezeigt ist. In diesem Fall ist der Weg für die Adapter 40 in der Hauptförderstrecke 58 wieder frei.

Die Weiche 34 muss in dem oben beschriebenen Fall nicht aktiv betätigt oder geschaltet werden. Die Adapter 40 können die Zunge 50 selbsttätig umstellen, wenn sie aus der Abzweigung 60 oder dem rechten Teil der Hauptförderstrecke 58 kommen. Dies vereinfacht eine Steuerung der Gesamtanlage. Es muss lediglich Sorge getragen werden, dass nie zwei Adapter 40 gleichzeitig bei der Zunge 50 ankommen, da eine derartige Situation zu einem Stau, d.h. einer mechanischen Blockade, führen kann. Anhand des eben skizzierten Beispiels ist es aber einfach zu verstehen, dass die bei der Erfindung eingesetzten Weichen 34 simpel aufgebaut (z.B. ohne Antrieb) sind und einfach anzusteuern sind. Komplizierter aufgebaute Weichen 34 (aktiv, inkl. Antrieb), bei denen sich mehr als drei Strecken im Knoten 59 treffen, werden nicht eingesetzt. Die Verteileinrichtung 16 der Erfindung wird aus ganz einfachen Förderelementen 26 aufgebaut. Geraden 30, Kurven 32 und die eben erläuterten Weichen 34 sind Standardkomponenten von (baukastenförmig aufgebauten) Hängeförderern.

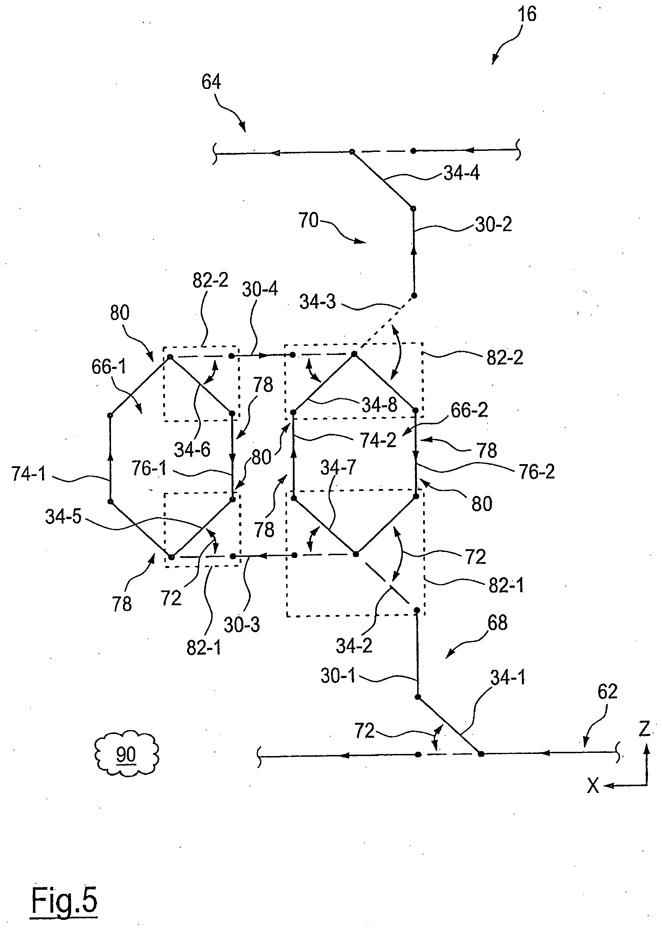

In Fig. 5 ist ein Strukturdiagramm einer Streckenführung der erfindungsgemäßen Verteileinrichtung 16 gezeigt.

Die Verteileinrichtung 16 weist eine Zuführstrecke 62, eine Abführstrecke 64 sowie mindestens zwei dazwischen angeordnete Speicherkreisel 66-1 und 66-2 auf. Des Weiteren weist die Verteileinrichtung 16 mindestens eine Vorstaustrecke 68 und eine Nachstaustrecke 70 auf. Die Vorstaustrecke 68 verbindet die Zuführstrecke 62 mit einem der Speicherkreisel 66. Die Vorstaustrecke 68 koppelt die Zuführstrecke 62 an einen der Speicherkreisel 66. Die Nachstaustrecke 70 koppelt zum Beispiel den ersten Speicherkreisel 66-1 an die Abführstrecke 64. Die Nachstaustrecke 70 verbindet den zweiten Speicherkreisel 66-2 mit der Abführstrecke 64. Ein Hauptförderstrom fließt von der Zuführstrecke 62 kommend über die Speicherkreisel 66 in die Abführstrecke 64, wo er die Verteileinrichtung 16 wieder verlässt.

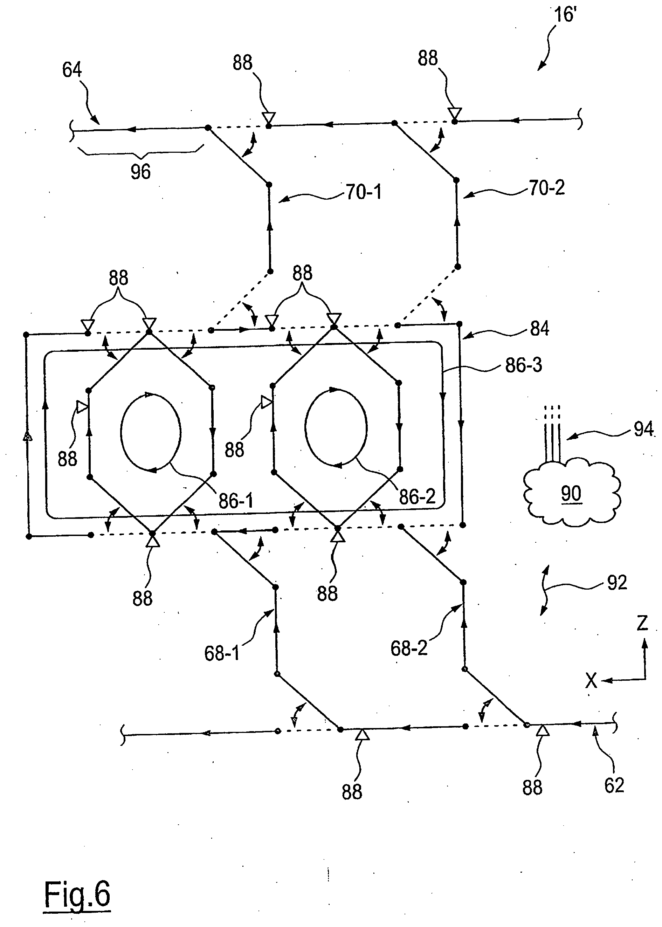

Die Vorstaustrecke 68 kann eine oder mehrere Geraden 30-1 aufweisen. Die Vorstaustrecke 68 kann über eine erste Weiche 34-1 mit der Zuführstrecke 62 verbunden sein. Die Vorstaustrecke 68 kann über eine zweite Weiche 34-2 mit dem zweiten Speicherkreisel 66-2 verbunden sein. Die erste Weiche 34-1 und die zweite Weiche 34-2 sind optional, soweit die Vorstaustrecke 68 betroffen ist. Die erste Weiche 34-1 wird benötigt, wenn stromabwärts zur Vorstaustrecke 68 weitere Vorstaustrecken 68 (vgl. Fig. 6) oder andere Förderelemente 26 angeordnet sind. Mit der zweiten Weiche 34-2 kann ein Abfluss und ein Zufluss für den zweiten Speicherkreisel 66-2 geregelt werden. Die zweite Weiche 34-2 ist im Beispiel der Fig. 5 sowohl Teil der Vorstaustrecke 68 als auch Teil des zweiten Speicherkreisels 66-2.

Die Weichen 34 agieren generell wie ein elektrischer Schalter (genau zwei Schaltzustände AN/AUS) und stellen Verbindungen zwischen verschiedenen Förderabschnitten her oder trennen diese. Die Weichen 34 lassen sich in zwei Positionen stellen, wie es durch einen Hilfspfeil 72 angedeutet ist.

Die Nachstaustrecke 70 weist zum Beispiel eine Gerade 30-2 auf. Die Nachstaustrecke 70 ist über eine Weiche 34-3 mit dem zweiten Speicherkreisel 66-2 verbunden. Die Weiche 34-3 ist sowohl Teil der Nachstaustrecke 70 als auch Teil des zweiten Speicherkreisels 66-2. Die Nachstaustrecke 70 ist über eine (optionale) Weiche 34-4 mit der Abführstrecke 64 verbunden. Die Weiche 34-4 wird benötigt, wenn Strom aufwärts relativ zur Nachstaustrecke 70 weitere Förderelemente 26 vorhanden sind.

Üblicherweise laufen die Zuführstrecke 62 und die Abführstrecke 64 endlos um, so dass im Bereich der Vorstaustrecke 68 und der Nachstaustrecke 70 oft eine Weiche 34-1 bzw. 34-4 zum Einsatz kommt.

Jeder Speicherkreisel 66 weist eine, vorzugsweise geradlinige, Anlieferstrecke 74 und eine, vorzugsweise geradlinige, Rückführstrecke 76 auf. Jede der Strecken 74 und 76 weist jeweils ein stromaufwärts gelegenes Ende 78 und ein stromabwärts gelegenes Ende 80 auf. Die Enden 78 und 80 der Strecken 74 und 76 sind über Weichengruppen 82 miteinander verbunden.

Der erste Speicherkreisel 66-1 weist eine Anlieferstrecke 74-1 und eine Rückführstrecke 76-1 auf. Ein stromaufwärts gelegene Ende 78 der Anlieferstrecke 74-1 ist mit einem stromabwärts gelegenen Ende 80 der Rückführstrecke 76-1 über eine Weiche 34-5 verbunden. Die Weiche 34-5 bildet eine erste Weichengruppe 82-1 des ersten Speicherkreisels 66-1. Ein stromabwärts gelegenes Ende 80 der Anlieferstrecke 74-1 ist mit einem stromaufwärts gelegenen Ende 78 der Rückführstrecke 76-1 über eine Weiche 34-6 verbunden. Die Weiche 34-6 bildet eine zweite Weichengruppe 82-2. Die Weichen 34-5 und 34-6 können so geschaltet werden, dass Fördergüter im ersten Speicherkreisel 66-1 endlos umlaufen können. Die Weiche 34-5 kann alternativ so geschaltet werden, dass Fördergüter über eine Gerade 30-3 aus Richtung des zweiten Speicherkreisels 66-2 in den ersten Speicherkreisel 66-1 eingespeist werden können. Die Weiche 34-6 der zweiten Weichengruppe 82-2 kann so gestaltet werden, dass Fördergüter aus dem ersten Speicherkreisel 66-1 in eine Gerade 30-4 ausgeschleust werden können. Es versteht sich, dass die Geraden 30-3 und 30-4 durch andere Förderelemente 26 ausgetauscht werden können. Die Geraden 30-3 und 30-4 sind exemplarischer Natur.

Der zweite Speicherkreisel 66-2 weist eine Anlieferstrecke 74-2 und eine Rückführstrecke 76-2 auf. Ein stromaufwärts gelegenes Ende 78 der Anlieferstrecke 74-2 ist mit einem stromabwärts gelegenen Ende 80 der Rückführstrecke 76-2 über die Weiche 34-2 und eine Weiche 34-7 verbunden. Die Weichen 34-2 und 34-7 definieren eine erste Weichengruppe 82-1 des zweiten Speicherkreisels 66-2. Ein stromabwärts gelegenes Ende 80 der Anlieferstrecke 74-2 ist mit einem stromaufwärts gelegenen Ende 78 der Rückführstrecke 76-2 über die Weiche 34-3 und eine Weiche 34-8 verbunden. Die Weichen 34-3 und 34-8 definieren eine zweite Weichengruppe 82-2 des zweiten Speicherkreisels 66-2.

Die Weichen 34-2, 34-7, 34-8 und 34-3 können so geschaltet werden, dass die Fördergüter innerhalb des zweiten Speicherkreisels 66-2 endlos umlaufen. Die Weiche 34-2 kann so geschaltet werden, dass neue Fördergüter von der Zuführstrecke 62 in Richtung der Speicherkreisel 66-1 und 66-2 transportiert werden können. Die Weiche 34-7 kann so geschaltet werden, dass die neuen Fördergüter in Richtung des ersten Speicherkreisels 66-1 transportiert werden. Die Weiche 34-8 kann so geschaltet werden, dass Fördergüter aus dem ersten Speicherkreisel 66-1 entweder in den zweiten Speicherkreisel 66-2 oder in die Nachstaustrecke 70 eingespeist werden. Die Weiche 34-3 kann so geschaltet werden, dass die Fördergüter in den zweiten Speicherkreisel 66-2 eingespeist werden, im zweiten Speicherkreisel 66-2 verbleiben oder in die Nachstaustrecke 70 geleitet werden.

Die Vorstaustrecke 68 hat die Funktion, dass neue Fördergüter zwischengepuffert werden können, bevor sie in einen der zwei Speicherkreisel 66-1 oder 66-2 eingespeist werden. Die Nachstaustrecke 70 hat die Funktion, Fördergüter zu sammeln, die gemäß einem Kommissionierauftrag aus einem oder beiden Speicherkreiseln 66-1 und 66-2 zusammengestellt, d.h. gesammelt, werden, bevor eine derartige Gruppe von Fördergütern (Kommissionierauftrag) in die Abführstrecke 64 eingespeist wird. Die Speicherkreisel 66-1 und 66-2 haben jeweils die Funktion, eine größere Menge von Fördergütern zu speichern. Fördergüter, die zu mehreren, verschiedenen Kommissionieraufträgen gehören, können in den Speicherkreiseln 66-1 und 66-2 gesammelt werden, nachdem sie über die Zuführstrecke 62 eingespeist wurden.

Üblicherweise werden die Speicherkreisel 66 artikelorientiert befüllt. Dies bedeutet, dass eine gewisse Anzahl von Kommissionieraufträgen von einer übergeordneten Steuerung 90 hinsichtlich der Auftragszeilen analysiert wird. So wird zum Beispiel überprüft, in wie vielen Aufträgen ein Artikel A benötigt wird. Das Ergebnis einer derartigen Analyse kann sein, dass zum Beispiel drei Aufträge den Artikel A insgesamt fünfmal zur Abarbeitung benötigen. In diesem Fall würde der Artikel A aus dem Lager 16 (vgl. Fig. 1) fünfmal ausgelagert und über die Zuführstrecke 62 und die Vorstaustrecke 68 in die Speicherkreisel 66 eingespeist werden. Diese Vorgehensweise wird so oft wiederholt, bis alle Artikel der momentan bearbeiteten Gruppe von Kommissionieraufträgen (Batch) in den Speicherkreiseln 66 vorhanden sind. Anschließend werden die Artikel (Fördergüter) auftragsorientiert in die Nachstaustrecke 70 transferiert. Von der oder den Nachstaustrecken 70 können die Fördergüter anschließend entweder an einen Sorter 18 oder direkt an den Warenausgang 20 (vgl. jeweils Fig. 1) geliefert werden. Wenn die Fördergüter im Bereich der Nachstaustrecke 70 noch nicht in der richtigen Reihenfolge (z.B. 1, 2, 3, 4, ... , n) vorliegen, können sie im Sorter 18 in die richtige Reihenfolge gebracht werden, um anschließend an den Warenausgang 20 geliefert zu werden.

In Fig. 6 ist eine Abwandlung einer Verteileinrichtung 16' gezeigt.

Die Verteileinrichtung 16' der Fig. 6 ist sehr ähnlich zur Verteileinrichtung 16 der Fig. 5 aufgebaut. Die Verteileinrichtung 16' der Fig. 6 weist aber mehrere Vorstaustrecken 68-1 und 68-2 sowie mehrere Nachstaustrecken 70-1 und 70-2 auf. Des Weiteren sind die Speicherkreisel 66, die jeweils eine Transportschleife 86-1 bzw. 86-2 definieren, innerhalb eines Umlaufkreisels 84 angeordnet. Der Umlaufkreisel 84 ist aus Förderelementen 26 aufgebaut. Der Umlaufkreisel 84 koppelt die Weichengruppen 82 aneinander. Der Umlaufkreisel 84 stellt eine dritte Transportschleife 86-3 dar. Die Transportschleifen 86 sind als geschlossene (Material-fluss-)Schleifen angedeutet.

Ferner sind in der Fig. 6 Identifikationseinrichtungen 88 exemplarisch eingezeichnet. Die Identifikationseinrichtungen 88 sind auch Teil der Verteileinrichtung 16 der Fig. 5, obwohl sie dort nicht dargestellt sind. Die Identifikationseinrichtungen 88 können zum Beispiel Barcode-Lesegeräte, RFID-Lesegeräte, sonstige Scanner oder Ähnliches sein und werden üblicherweise durch entsprechende Sensoren implementiert. Die Identifikationseinrichtungen 88 dienen dem Zweck, die Fördergüter im Bereich von (materialflusstechnischen) Verzweigungen vorab zu identifizieren. Basierend auf dieser Identifikation kann die übergeordnete Steuerung 90 entscheiden, wohin das entsprechend identifizierte Fördergut befördert werden muss. Über eine drahtlose Verbindung 92 und/oder über verdrahtete Verbindungen 94 können Schaltelemente, wie zum Beispiel die Weichen 34, entsprechend angesteuert werden.

In der Fig. 6 ist zum Beispiel jeweils stromaufwärts zu den Vorstaustrecken 68-1 eine Identifikationseinrichtung 88 angeordnet. An den stromabwärts gelegenen Enden 80 der Anlieferstrecken 74 der Speicherkreisel 66 ist jeweils eine Identifikationseinrichtung 88 angeordnet. Bei den Knotenpunkten der Speicherkreisel 66 kann jeweils eine Identifikationseinrichtung 88 angeordnet sein. Stromaufwärts zu den Nachstaustrecken 70-1 und 70-2 kann jeweils eine Identifikationseinrichtung im Bereich der Abführstrecke 64 angeordnet sein. Weitere Identifikationseinrichtungen 88 können an materialflussneuralgischen Punkten vorgesehen werden.

Grundsätzlich gilt bei den Verteileinrichtungen 16 und 16' der Fig. 5 und 6, dass die Fördergüter in den Speicherkreiseln 66 alle gleichzeitig bewegt werden können. Bei der "Sortierinsel"-Lösung (vgl. Fig. 10) ist dies nicht möglich, da immer nur eine der Staustrecken 110 in Richtung der Sortier-/Pick-Strecke 112 und der Nachstaustrecke 70 bewegt werden kann. Wenn zum Beispiel die Staustrecke 110-1 bewegt wird, können die restlichen Staustrecken 110-2 bis 110-4 keine Fördergüter 114 abgeben, die in der Fig. 10 als Querstriche angedeutet sind.

Im Gegensatz zur "Speicherkreisel"-Lösung, wie sie in der Fig. 9 skizziert ist, können die Verteileinrichtungen 16 und 16' der Fig. 5 und 6 Fördergüter in ein und dieselbe Nachstaustrecke 70 transportieren. Bei der vorbekannten "Speicherkreisel"-Lösung der Fig. 9 verfügt jeder Speicherkreisel über eine eigene Vorstaustrecke 68 und eine eigene Nachstaustrecke 70. Wenn die Nachstaustrecke 70 zum Beispiel eine Kapazität zur Aufnahme von zehn Fördergütern 114 hat, ein Kommissionierauftrag aber mehr als zehn Fördergüter, zum Beispiel zwölf Fördergüter 114, umfasst, ist bei der vorbekannten Lösung der Fig. 9 keine Auftragssplitting möglich. Bei der vorliegenden Erfindung ist eine Auftragssplitting möglich, indem eine erster Teil des Auftrags in der ersten Nachstaustrecke 70-1 und ein zweiter Teil des Auftrags in der zweiten Nachstaustrecke 70-2 gesammelt wird (vgl. Fig. 6). Ein Auftragssplitting ist auch dahingehend möglich, dass die Fördergüter aus unterschiedlichen Speicherkreiseln 66 stammen können. Mit der Anordnung der Fig. 6 ist es möglich, Fördergüter aus unterschiedlichen Speicherkreiseln 66 auf ein und dieselbe Nachstaustrecke 70 zu leiten.

Ein weiterer Vorteil der Erfindung ist darin zu sehen, dass insbesondere die Speicherkreisel 66 in der Längsrichtung X sehr kurz bauen und eng zueinander beabstandet werden können. Ein Abstand zwischen einer (geraden) Anlieferstrecke 74 und einer (parallel dazu angeordneten) Rückführstrecke 76 kann in einer Größenordnung von 500 mm liegen. Der Abstand zwischen benachbarten Speicherkreiseln 66 kann in einer Größenordnung von beispielsweise 250 mm liegen.

Ein weiterer Vorteil der Erfindung ist darin zu sehen, dass Fördergüter zwischen den Speicherkreiseln 66, zum Beispiel über Nacht, umgelagert werden können, was bei der vorbekannten Lösung gemäß der Fig. 9 generell nicht möglicht ist. Die Fördergüter können auch chaotisch, d.h. ohne feste Zuordnung, in die Speicherkreisel 66 eingespeist werden.

Da beliebig viele Speicherkreisel nebeneinander vorgesehen werden können, ist die vorgeschlagene Lösung beliebig skalierbar.

Ein Durchsatz (Anzahl von fertig zusammengestellten Gruppen von Fördergütern (Kommissionieraufträge/Zeiteinheit) wird maximiert und optimiert.

Eine Flexibilität hinsichtlich der Möglichkeiten, die Fördergüter umzulagern und zusammenzustellen, wird erhöht, zum Beispiel durch entsprechende Sortieralgorithmen.

Als besonders vorteilhaft hat es sich herausgestellt, dass die Verteileinrichtungen 16 gemäß der Erfindung durch einfache (Standard-)Komponenten der Fördertechnik, nämlich Geraden, Kurven und Weichen, aufgebaut werden.

Bezug nehmend auf Fig. 7 ist eine weitere Abwandlung einer Verteileinrichtung 16" gezeigt.

Die Verteileinrichtung 16" der Fig. 7 unterscheidet sich von den Verteileinrichtungen 16 und 16' der Fig. 5 und 6 dadurch, dass mehr als zwei Speicherkreisel 66 vorgesehen sind. In der Fig. 7 ist ein dritter Speicherkreisel 66-3 gezeigt. Weitere Speicherkreisel 66-n sind durch eine Strichlinie angedeutet.

Des Weiteren kann pro Speicherkreisel 66 eine Vorstaustrecke 68 und eine Nachstaustrecke 70 vorgesehen sein.

Der Umlaufkreisel 84 der Fig. 6 ist durch zwei Umlaufkreisel 84-1 und 84-2 ersetzt. Der erste Umlaufkreisel 84-1 verbindet die ersten Weichengruppen 82-1 der Speicherkreisel 66 miteinander. Der zweite Speicherkreisel 84-2 verbindet die zweiten Weichengruppen 82-2 der Speicherkreisel 66 miteinander.

Für alle der oben erläuterten Verteileinrichtungen 16 gilt, dass Umlager-, Vorsortier- und Batch-Zusammenstellungsprozesse simultan über alle Speicherkreisel 66 und Inseln durchgeführt werden können. Unter einer Insel wird nachfolgend eine Gruppe von jeweils direkt benachbarten Speicherkreiseln 66 verstanden, die autark als Funktionseinheit hinsichtlich des Fördergutstroms angesehen werden. Dies bedeutet, dass eine Verteilvorrichtung 16 mit sechs Speicherkreiseln 66 z.B. drei Inseln aufweisen kann, wobei jede Insel zwei aneinander grenzende Speicherkreisel 66 aufweist.

Während z.B. in Übereinstimmung mit einem Auftrag zusammengestellte Fördergüter aus einem n-ten Speicherkreisel 66-n oder aus einer n-ten Insel zur Weiterverarbeitung (z.B. Sortierung) über die Abführstrecke 64 abgezogen werden, kann in den restlichen Speicherkreiseln 66-1, ... , 66-(n-1), die eine oder mehrere (weitere) Inseln bilden können, autark eine Umlagerung, Batchbildung oder Ähnliches vorgenommen werden. Die restlichen Speicherkreisel können, ohne einen Hauptförderstrom zu belasten, miteinander zu einer oder mehreren Inseln verbunden werden. Batches mit Fördergütern aus verschiedenen Speicherkreiseln können z.B. in einem einzigen Speicherkreisel gesammelt werden.

Es ist möglich innerhalb einer Insel, einen Speicherkreisel als Batch-Puffer zu deklarieren und aus dieser (oder aus mehreren) Inseln komplette Batches zu sammeln und zusammenzustellen, um diese Batches dann geschlossen an die Abführstrecke abzugeben. Gemäß dem Stand der Technik wurden viele, kleinere Teilmengen der Batches aus Speicherkreiseln oder aus Inseln in einen (in den Figuren nicht dargestellten) Batch-Vorsortierbereich geschickt, der stromaufwärts relativ zum Sorter 18 (vgl. 1) lag. Bei der Erfindung wird der Hauptförderstrom, insbesondere im Bereich der Abführstrecke 64, entlastet. Es kann ggf. auf Batch-Vorsortierbereiche verzichtet werden. Dies führt zu einer Kapazitätserhöhung. Der Hauptförderstrom kann bruchstückhaft gespeist oder geleert werden. Die Deklarierung eines oder mehrerer Speicherkreisel 66 zu einem Batch-Puffer kann völlig dynamisch erfolgen. Dies stellt einen großen Vorteil bei einem Mix von Aufträgen der Kategorien "Business to Business to Costumer" dar.

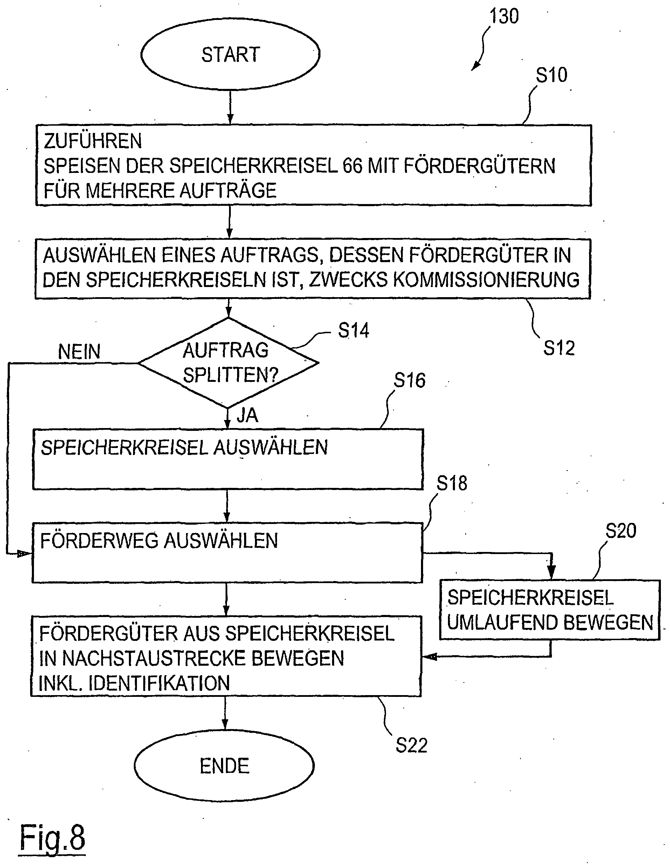

In Fig. 8 ist ein Flussdiagramm eines Verfahrens 130 zum Zusammenstellen einer Gruppe von Fördergütern gezeigt; die zu einem bestimmten Kommissionierauftrag aus einer Vielzahl von Kommissionieraufträgen gehören.

Das Verfahren 130 weist mehrere Schritte auf. In einem ersten Schritt S10 werden mehr Fördergüter 114 über die Zuführstrecke 62 zugeführt als zur Gruppe von Fördergütern gehören. Anschließend werden alle zugeführten Fördergüter in die mindestens zwei Speicherkreisel 66 eingespeist (vgl. Schritt S10).

In einem Schritt S12 wird ein (Kommissionier-)Auftrag ausgewählt, dessen Fördergüter sich bereits in einem der oder in beiden Speicherkreiseln 66 befinden. Die Auswahl erfolgt zum Zwecke der Kommissionierung, d.h. um die Fördergüter, die zu dem ausgewählten Kommissionierauftrag gehören, zusammenzustellen.

In einem Schritt S14 kann die Steuerung 90 abfragen, ob der Auftrag aufgeteilt werden muss. Eine Aufteilung kann zum Beispiel erforderlich sein, wenn die Nachstaustrecke 70 keine ausreichende Kapazität zur Aufnahme aller Fördergüter 114 hat, die zu dem bestimmten, ausgewählten Auftrag gehören. Die Aufteilung kann auch erforderlich sein, wenn die Fördergüter in unterschiedlichen Speicherkreiseln 66 bevorratet sind.

In einem Schritt S16 können der oder die Speicherkreisel 66 ausgewählt werden, aus denen Fördergüter 114 ausgeschleust werden müssen. In einem Schritt S18 kann die Steuerung 90 einen Förderweg auswählen bzw. bestimmen. Für jedes Fördergut 114 kann ein eigener Förderweg bestimmt werden, den das Fördergut 114 auf seinem Weg zu seiner ihm zugeordneten Nachstaustrecke 70 zurücklegen soll.

In einem Schritt S22 werden die Fördergüter 114, die zu dem bestimmten Auftrag gehören, aus dem oder den Speicherkreiseln 66 in die ihnen jeweils zugeordnete Nachstaustrecke 70 bewegt. Der Schritt S22 umfasst auch die Identifikation der Fördergüter 114 mittels der Identifikationseinrichtungen 88 an Verzweigungspunkten, insbesondere stromaufwärts relativ zu den Weichen 34. Währenddessen können die Speicherkreisel 66 umlaufend bewegt werden, wie es in einem Schritt S20 gezeigt ist.

Beim Einschleusen der Fördergüter 114 in die Speicherkreisel 66 ist es nicht erforderlich, vorab für jedes Fördergut 114 festzulegen, in welchen Speicherkreisel 66 das Fördergut 114 eingespeist wird. Natürlich kann eine derartige Zuordnung bereits (datentechnisch) vorab erfolgen, so dass jeder der Speicherkreisel 66 ein vorbestimmtes Sortiment an Fördergütern aufweist.

Die oben stehende Beschreibung der Figuren hält sich bei der Wahl der Orientierung der Koordinatensysteme generell an die in der (Intra-)Logistik üblichen Bezeichnungen, so dass die Längsrichtung mit X, die Breite mit Z und die (vertikale) Höhe mit Y bezeichnet wurden.

Des Weiteren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (wie zum Beispiel "oben", "unten", "seitlich", "längs", "quer", "horizontal", "vertikal" oder dgl.) sind auf die unmittelbar beschriebene Figur bezogen. Bei einer Änderung der Lage oder Orientierung sind die Angaben aber sinngemäß auf die Lage bzw. Orientierung zu übertragen.

## Patentansprüche

1. Verteileinrichtung (16) mit einer Fördereinrichtung (24), wobei die Fördereinrichtung (24) nur Geraden (30), Kurven (32) und Weichen (34) als Förderelemente (26) aufweist, wobei die Verteileinrichtung (16) aufweist:
mindestens zwei Speicherkreisel (66), wobei jeder Speicherkreisel (66) eine Anlieferstrecke (74) mit einem stromaufwärts gelegenen Ende (78) und mit einem stromabwärts gelegenen Ende (80), eine Rückführstrecke (76) mit einem stromaufwärts gelegenen Ende (78) und mit einem stromabwärts gelegenen Ende (80) und zwei Weichengruppen (82-1, 82-2) aufweist, wobei jede Weichengruppe (82) eines der Enden (78, 80) der Anlieferstrecke (74) mit einem benachbart angeordneten Ende (80, 78) der Rückführstrecke (76) verbindet, so dass ein Fördergut in dem entsprechenden Speicherkreisel (66) in einer festen Richtung umlaufend transportierbar ist, wobei jeweils eine der zwei Weichengruppen (82-1) stromaufwärts gelegen ist und die andere Weichengruppe (82-2) stromabwärts gelegen ist;
eine Zuführstrecke (62);
eine Abführstrecke (64);
mindestens eine Vorstaustrecke (68), die die Zuführstrecke (62) an die mindestens zwei Speicherkreisel (66) über die zugehörigen stromaufwärts gelegenen Weichengruppen (82-1) koppelt; und
mindestens eine Nachstaustrecke (70), die die Abführstrecke (64) an die mindesten zwei Speicherkreisel (66) über die zugehörigen stromabwärts gelegenen Weichengruppen (82-2) koppelt,
**dadurch gekennzeichnet, dass** ferner mindestens ein Umlaufkreisel (84) mit einem endlos umlaufenden Förderstrang (42) vorgesehen ist, wobei die Weichengruppen (82) an den mindestens einen Umlaufkreisel (84) koppeln,
wobei nur ein Umlaufkreisel (84) vorgesehen ist und wobei die mindestens zwei Speicherkreisel (66) innerhalb des nur einen Umlaufkreisels (84) angeordnet sind, und
wobei die Anlieferstrecke (74-1) eines ersten Speicherkreisels (66-1) der mindestens zwei Speicherkreisel (66) und die Rückführstrecke (76-2) eines letzten der mindestens zwei Speicherkreisel (66) Teil des nur einen Umlaufkreisels (84) sind.

2. Verteileinrichtung nach Anspruch 1, wobei jede Weichengruppe (82) eine Vielzahl von Weichen (34) aufweist, insbesondere mindestens eine einfache Links-Weiche und eine einfache Rechts-Weiche.

3. Verteileinrichtung nach einem der Ansprüche 1 bis 2, wobei jedem Speicherkreisel (66) mindestens eine Identifikationseinrichtung (88) zugeordnet ist, die eingerichtet ist, ein passierendes Fördergut zu identifizieren, um ein Ausschleusen des identifizierten Förderguts zu veranlassen.

4. Verteileinrichtung nach einem der Ansprüche 1 bis 3, wobei ferner eine Steuerung (90) vorgesehen ist, die eingerichtet ist, Fördergüter, die in den mindestens zwei Speicherkreiseln (66) zwischengespeichert sind, in Übereinstimmung mit einem Kommissionierauftrag auszuschleusen und im Bereich (96) der Nachstaustrecke (70) zusammenzuführen.

5. Verteileinrichtung nach einem der Ansprüche 1 bis 4, wobei die Fördereinrichtung (24) ein Hängeförderer ist.

## Claims

1. Distribution device (16) including a conveying device (24), wherein the conveying device (24) merely comprises straights (30), curves (32), and switches (34) as conveying elements (26), wherein the distribution device (16) comprises:
at least two buffering circles (66), wherein each of the buffering circles (66) comprises a delivery line (74) having an upstream end (78) and a downstream end (80), a return line (76) having an upstream end (78) and a downstream end (80), and two groups of switches (82-1, 82-2), wherein each of the group of switches (82) connects one of the ends (78, 80) of the delivery line (74) to an adjacent end (80, 78) of the return line (76) so that a conveying good can be transported in the corresponding buffering circle (66) in a fixed direction in a circulating manner, wherein respectively one of the two groups of switches (82-1) is located upstream and the other group of switches (82-2) is located downstream;
a feeding line (62);
a discharging line (64);
at least one pre-accumulating line (68) coupling the feeding line (62) to the at least two buffering circles (66) via the associated group of switches (82-1) located upstream; and
at least one post-accumulating line (70) coupling the discharging line (64) to the at least two buffering circles (66) via the associated group of switches (82-2) located downstream,
**characterized in that** at least one circulating circle (84) having an endless circulating conveying line (42) is further provided, wherein the groups of switches (82) couple to the at least one circulating circle (84),
wherein only one circulating circle (84) is provided, and wherein the at least two buffering circles (66) are arranged within said only one circulating circle (84), and
wherein the delivery line (74-1) of a first buffering circle (66-1) of the at least two buffering circles (66) and the return line (76-2) of a last one of the at least two buffering circles (66) are part of said only one circulating circle (84).

2. The distributing device of claim 1, wherein each of the groups of switches (82) comprises a plurality of switches (34), in particular at least one simple left switch and one simple right switch.

3. The distributing device of one of claims 1 to 2, wherein each of the buffering circles (66) has assigned at least one identification device (88) configured to identify a conveying good passing in order to cause discharging of the identified conveying good.

4. Distribution device of one of claims 1 to 3, wherein a controller (90) is additionally provided, which is configured to discharge conveying goods, buffered in the at least two buffering circles (66), in accordance with a picking order and to bring the same together in a region (96) of the post-accumulating line (70).

5. The distributing device of one of claims 1 to 4, wherein the conveying device (24) is an overhead conveyor.

## Revendications

1. Dispositif de distribution (16) comprenant un dispositif de transport (24), le dispositif de transport (24) présentant, en tant qu'éléments de transport (26), uniquement des droites (30), des courbes (32) et des bifurcations (34), le dispositif de distribution (16) présentant :
au moins deux convoyeurs circulaires de stockage (66), chaque convoyeur circulaire de stockage (66) présentant une section de livraison (74) ayant une extrémité amont (78) et une extrémité aval (80), une section de retour (76) ayant une extrémité amont (78) et une extrémité aval (80), et deux groupes de bifurcation (82-1, 82-2), chaque groupe de bifurcation (82) reliant l'une des extrémités (78, 80) de la section de livraison (74) à une extrémité adjacente (80, 78) de la section de retour (76), de sorte qu'un produit transporté dans le convoyeur circulaire de stockage correspondant (66) puisse être transporté de manière circulaire, dans une direction fixe, à chaque fois l'un des deux groupes de bifurcation (82-1) étant situé en amont, et l'autre groupe de bifurcation (82-2) étant situé en aval ;
une section d'amenée (62) ;
une section d'enlèvement (64) ;
au moins une section de pré-accumulation (68) qui accouple la section d'amenée (62) aux au moins deux convoyeurs circulaires de stockage (66), via les groupes de bifurcation amont correspondants (82-1) ; et
au moins une section de post-accumulation (70), qui accouple la section d'enlèvement (64) aux au moins deux convoyeurs circulaires de stockage (66), via les groupes de bifurcation aval correspondants (82-2),
**caractérisé en ce qu'**en outre au moins un convoyeur circulaire périphérique (84) est pourvu d'une section de transport (42) circulant sans fin, les groupes de bifurcation (82) s'accouplant à l'au moins un convoyeur circulaire périphérique (84),
seulement un convoyeur circulaire périphérique (84) étant prévu, et les au moins deux convoyeurs circulaires de stockage (66) étant disposés à l'intérieur de l'unique convoyeur circulaire périphérique (84), et
la section de livraison (74-1) d'un premier convoyeur circulaire de stockage (66-1) des au moins deux convoyeurs circulaires de stockage (66) et la section de retour (76-2) d'un dernier des au moins deux convoyeurs circulaires de stockage (66) faisant partie de l'unique convoyeur circulaire périphérique (84).

2. Dispositif de distribution selon la revendication 1, dans lequel chaque groupe de bifurcation (82) présente une pluralité de bifurcations (34), en particulier au moins une bifurcation simple vers la gauche et une bifurcation simple vers la droite.

3. Dispositif de distribution selon l'une quelconque des revendications 1 et 2, dans lequel au moins un dispositif d'identification (88) est associé à chaque convoyeur circulaire de stockage (66), lequel est prévu pour identifier le passage d'un produit transporté, afin de permettre l'évacuation du produit transporté identifié.

4. Dispositif de distribution selon l'une quelconque des revendications 1 à 3, dans lequel il est en outre prévu une commande (90) qui est prévue pour éjecter des produits transportés qui sont stockés temporairement dans les au moins deux convoyeurs circulaires de stockage (66), en coïncidence avec un ordre de préparation de commande, et pour les réunir dans la région (96) de la section de post-accumulation (70).

5. Dispositif de distribution selon l'une quelconque des revendications 1 à 4, dans lequel le dispositif de transport (24) est un transporteur suspendu.
